# EUROPEAN PATENT SPECIFICATION

(11) **EP 4 423 403 B1**
(45) Date of publication and mention of the grant of the patent: **26.11.2025**
(21) Application number: 22826236.6
(22) Date of filing: 21.10.2022
(51) Int. Cl.: F16D 55/224, B61H 5/00, F16D 65/18, F16D 125/52, F16D 121/24

(54) **ELECTRIC MOTOR-CONTROLLED DISC-BRAKE OF LEVER TYPE**
ELEKTROMOTORISCH BETÄTIGTE SCHEIBENBREMSE DER HEBELART
FREIN À DISQUE À COMMANDE PAR MOTEUR ÉLECTRIQUE DU TYPE À LEVIER

(30) Priority: 25.10.2021 SE 2130286
(43) Date of publication of application: 04.09.2024
(73) Proprietor: Dellner Bubenzer Aktiebolag, 781 70 Borlänge (SE)
(72) Inventor: LUNDELL, Anders, 443 32 Lerum (SE)
(74) Representative: Brann AB
(86) International application number: PCT/SE2022/050967
(87) International publication number: WO 2023/075661

(56) References cited:
- WO-A1-2018/036676
- DE-A1- 102010 023 700
- US-A- 4 175 645

## Description

### TECHNICAL FIELD OF THE INVENTION

The present invention relates to a disc-brake with a fixed brake caliper in which pivotally journalled levers with brake pads are controlled by an electric motor for pressing, by way of a tong, towards each side of a brake disc upon braking.

### BACKGROUND AND PRIOR ART

A disc-brake according to the invention is suitable for implementation in vehicles, such as in railway vehicles e.g., but may also be used in connection with stationary installations such as with drive shafts, turbine shafts, etc.

Usually, disc-brakes for rolling railway stock have brake discs that are non-rotationally mounted on a wheel shaft. The wheel shaft is journalled in a bogie that connects the wheels and wheel shafts to a vehicle chassis. The bogie, pivotally connected to the chassis, typically comprises a pair of laterally separated side beams that provide mounting support for a brake caliper in which brake pads are arranged and movable so as to be pressed towards the brake disc upon breaking.

Brake calipers for disc-brakes can be of fixedly mounted or of floating type. Floating brake calipers basically requires that only the brake pad of one side is positively pressed towards the brake disc since the brake caliper is free to move such that the breaking power is evenly distributed to the brake pads of both sides. In fixed brake calipers, typically, both brake pads are positively activated to press towards the brake disc upon breaking. The disc-brake of the present invention belongs to the later mentioned type having fixed brake calipers.

In railway vehicles, the brakes are usually associated with a pneumatic or a hydraulic actuation system comprising distribution lines to distribute and feed work pressure to all break units in a train set. In contrast, a disc-brake according to the present invention utilizes a separately powered and controlled electric motor in each disc-brake unit.

An electric motor-controlled disc-brake of lever type is previously known from WO2018036676 A1. In this previously known disc-brake, an electric motor operated angle gear is mounted fixed to an inner side of one of two mutually opposed levers that can swing in opposite directions. A worm screw in the angle gear is in operative engagement with a nut having an internal thread, the nut being non-rotationally mounted to the said one lever. A worm wheel in the angle gear is operated by an electric motor in order to rotate the worm screw which is then linearly extended towards the other one of the levers, causing the second lever to swing about its pivot axis. The worm screw acts upon a load sensor which is fixedly mounted to the second lever.

In the disc-brake of WO2018036676 A1 the electric motor and the angle gear are placed between the levers and thus requires a building space in the plane of the brake disc, or in other words, a building space in front of, behind, above or below the brake disc. A disc-brake of such configuration is well adapted for stationery and non-mobile installations with unlimited building space, but is less suitable for mobile implementations wherein the building space is limited, such as in case of railway bogies, e.g.

It will also be realized that the movement required to shift the position of brake pads from a rest position at the side of the brake disc into an operative position in frictional contact with the brake disc requires only a few or some millimetres in length. In effect of the gear ratio exerted by the levers, the required movement is enlarged and may be extended to a few or some centimetres in that end of the levers onto which the brake force is applied. Wear of the brake pads may further add to increase distance and angle between the levers in the force loaded end. Changes in angle between the levers may result in bending stresses on the lever mechanism, especially on the worm gear and the journaling of the same in the angle gear.

### SUMMARY OF THE INVENTION

The object of the present invention is to provide an electric motor-controlled disc-brake of lever type of alternative design.

One object of the present invention is to provide an electric motor-controlled disc-brake of lever type that is configured to be mounted in a limited or narrow building space.

A specific object of the present invention is to provide an electric motor-controlled disc-brake of lever type that is configured to be mounted in a bogie for a railway vehicle.

Another specific object of the present invention is to provide an electric motor-controlled disc-brake of lever type that is configured to avoid the load from bending stresses applied to structural elements and bearings in the lever mechanism.

One or several of these objects are met in an electric motor-controlled disc-brake of lever type comprising a brake disc configured for non-rotational mounting on a wheel shaft, a brake caliper with a first caliper-arm extending on a near side of the brake disc as viewed in a longitudinal direction along the wheel shaft. A second caliper-arm extends on the far side of the brake disc as viewed in the same direction of the wheel shaft. A first lever with a lever-portion is arranged for supporting a brake pad, the first lever being journalled on the first caliper-arm pivotally about a pivot axis that is orthogonal with respect to the first caliper-arm. A second lever with a lever-portion is arranged for supporting a brake pad, the second lever being journalled on the second caliper-arm pivotally about a pivot axis that is orthogonal with respect to the second caliper-arm. An angle gear holder is pivotally supported in either one of the lever-portion of the first lever or the lever-portion of the second lever, wherein the angle gear holder pivotally carries: an angle gear; a worm screw which is journalled in the angle gear and having a length sufficient to operate between the first lever and the second lever; a worm wheel in operative engagement with the worm screw; and an electric motor with a motor shaft operatively connected with the worm wheel, wherein the electric motor extends cantilevered from the angle gear in such way that the electric motor, one of the first and second levers, the brake disc and the other one of the first and second levers are arranged in essentially parallel planes and successively one after the other as viewed in the direction of the wheel shaft.

Initially it shall be explained, that the word "essentially" shall be interpreted such that the levers, the brake disc and the electric motor will be oriented in parallel at a certain loaded or unloaded situation, whereas the dynamics of the lever mechanism may cause the listed elements, during operation, to move into and out from an ideal position in parallel with each other, although any deviation from a parallel relation is yet small enough to make it reasonable to regard their mutual positions as essentially in parallel in all modes of operation.

It shall here also be observed that the wheel shaft forms no part of the present invention but is used in the disclosure as a reference for determining the relative position of the elements of the disc-brake.

The disc-brake of the above-said configuration meets the demand for a reduced building space and is especially suitable for mounting in a vehicle or in railway bogie, in effect of the relative orientation and interconnection of movable elements in the lever mechanism.

In one embodiment, the worm screw is arranged to act upon a load sensor which is pivotally supported in a longer arm-section of the oppositely positioned lever. A disc-brake of this embodiment prevents load from bending stresses to act on structural elements and bearings in the lever mechanism.

Alternative embodiments and advantageous features of the present invention will appear from the description below and from subordinated claims.

### BRIEF DESCRIPTION OF THE DRAWINGS

Embodiments of the present invention will be more closely explained below with reference made to the accompanying schematic drawings. In the drawings
Fig. 1 is a partially sectioned elevational view of a disc-brake according to the invention,
Fig. 2 is a partially sectioned view of the disc-brake seen from above, and
Fig. 3 is a partially sectioned end view of the disc-brake.

### DETAILED DESCRIPTION OF PREFERRED EMBODIMENTS

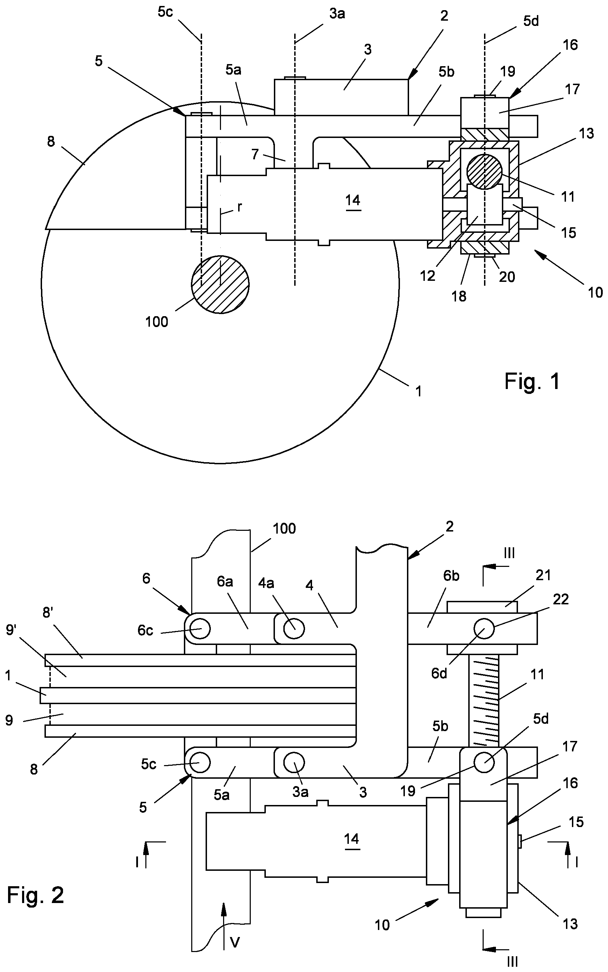

A braking assembly for reducing the rotation of a brake disc 1 shall now be described with reference to the drawings of Figs. 1, 2 and 3. The brake disc 1 is arranged to be non-rotationally mounted onto a wheel shaft, in a way not further shown per se. The wheel shaft itself is no part of the invention and is shown in Figs. 1, 2 and 3 under reference number 100 merely for the sake of completing the description.

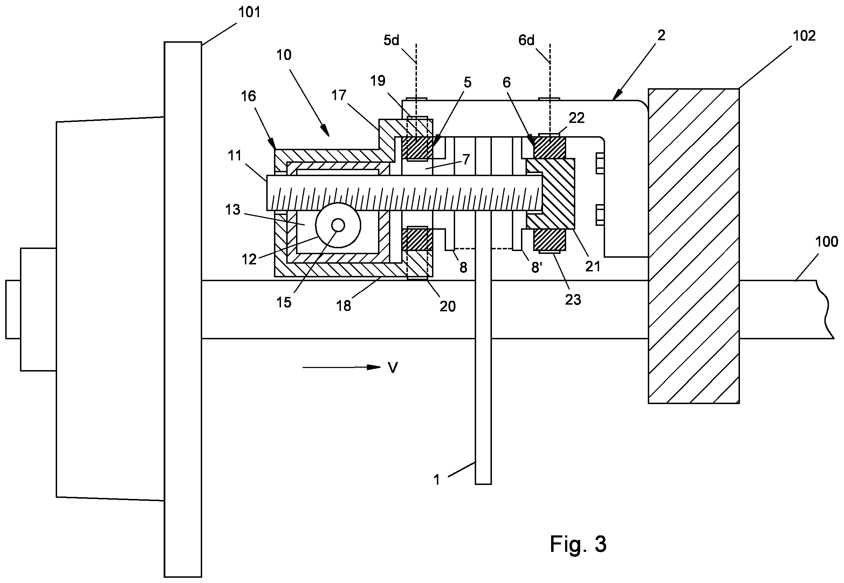

The braking assembly comprises a lever mechanism supported in a brake caliper 2. The brake caliper 2 is fixedly mounted in an adjacent structural element, such as a longitudinal beam 102 (see Fig. 3) which may form part of a railway bogie, e.g. The brake caliper 2 includes mainly two caliper-arms which are interconnected through a base member which provide in combination the brake caliper 2 the shape of a U. A first caliper-arm 3 extends in parallel with the brake disc and on a near side of the brake disc 1 when the brake disc is viewed in a direction V along the wheel shaft 100. A second caliper-arm 4 extends in parallel with the brake disc and on the far side of the brake disc 1 as viewed in the same direction V of the wheel shaft 100.

A lever mechanism comprises two levers running in parallel and pivotally journalled in the brake caliper 2. A first lever 5 is pivotally supported on a pivot axis 3a that runs orthogonal to the first caliper-arm 3. In a corresponding way, a second lever 6 is pivotally supported on a pivot axis 4a that runs orthogonal to the second caliper-arm 4. In a side elevational view (see the lever 5 in Fig. 1) the levers 5 and 6 can be compared to a lying H having fork-shaped arm-sections 5a and 5b, and 6a, 6b respectively, that extend in mutually opposite directions from a transverse beam 7 and 7' respectively (of which only the transverse beam 7 is visible in the drawings). The transverse beam 7 (7') forms a pivot support for the levers 5 (6) respectively upon rotation about the pivot axes 3a or 4a. The transverse beam 7 (7') divides the lever 5, 6 in a shorter lever arm-section 5a, 6a and a relatively longer lever arm-section 5b, 6b. In the embodiment of the brake assembly which is shown schematically in the drawings the length ratio is about 1:2, although other length and gear ratios would also be conceivable.

A holder 8 for mounting of a brake pad 9 is arranged in the shorter lever arm-section 5a of the first lever 5. In a way that will be explained below, the adjoining longer lever arm-section 5b can be arranged for connecting an angle gear 10. In a corresponding way, a mirrored holder 8' is arranged for mounting of a brake pad 9' in the shorter lever arm-section 6a of the second lever 6, whereas the adjoining longer lever arm-section 6b can be arranged for mounting of a load sensor 21 as will be explained below.

The holders 8 and 8' are preferably supported for pivoting about pivot axis 5c and 6c respectively in the lever arm-sections 5a and 6a of the levers 5 and 6. The lever arm-sections 5a and 6a can be oriented so as to extend substantially tangentially to the brake disc, or oriented so as to cross the periphery of the brake disc. The pivot axes 5c and 6c extend perpendicularly and orthogonally to the lever arm-sections 5a and 6a respectively, and are oriented in parallel with the pivot axes 3c and 4c. Alternatively, the pivot axes 5c and 6c may be coincident with a radius r of the brake disc, or may be offset in parallel with the radius.

The angle gear 10 comprises a worm screw 11 having a length sufficient to operate effectively between the lever arm-sections 5b and 6b, and a worm wheel 12 that is in operative forcetransmitting engagement with the worm screw 11. The worm screw 11 and the worm wheel 12 are journalled in an angle gear housing 13. An electric motor 14 is connected to the angle gear 10 and has a motor shaft 15 that is operatively connected to the worm wheel 12 för rotation of the worm wheel 12 which causes rotation and linear feed in the length direction of the worm screw 11. The geared engagement between the worm screw 11 and the worm wheel 12 may be self-locking such that rotation of the worm wheel results in rotation of the worm screw whereas the opposite is prevented by the design of the gears.

A holder 16 for the angle gear 10 is pivotally supported about a pivot axis 5d in the lever arm-section 5b of the first lever 5. In the illustrated embodiment, the angle gear holder 16 is formed as a U-shaped clamp having two arms 17 and 18 that are pivotally supported on a common pivot axis 5d in the fork-shaped lever arm-section 5b of the lever 5. To this purpose, the arms 17 and 18 of the angle gear holder can provide pivot pins or pivot pin seats 19 and 20.

The angle gear holder 16 can be realized as an individual component in which the angle gear housing 13 is mounted. Alternatively, the angle gear holder 16 can be realized as an integrated member of the angle gear housing 13. In an integrated embodiment, the angle gear holder can be realized as pivot pins or as pivot pin seats formed directly in the angle gear housing, in the drawings represented by reference numbers 19 and 20 as well.

The worm screw 11 reaches out from the angle gear housing 13 in such way that a free end of the worm screw abuts and applies pressure onto a load sensor 21. The load sensor 21 is pivotally supported in the lever arm-section 6b of the lever 6 which is opposite to the angle gear. In The load sensor 21 may be carried by a sensor holder (not shown in detail) which is journalled on pivot pins 22 and 23, pivotally about a pivot axis 6d in the fork-shaped lever arm-section 6b.

The angle gear 10 and the load sensor 21 are thus both pivoting and unhindered to adjust themselves such that a straight line of force always runs through the worm screw and the angle gear regardless of the relative orientation of the levers. Since the lever mechanism is supported to pivot unrestrictedly in the brake caliper, the levers will always adjust themselves such that the brake force is distributed evenly to the two sides of the brake disc.

The solution presented herein is not to be limited by any special type of motor, power supply or power and motor control. The motor specification shall be adapted to any subject application. As non-limiting example, a geared 24 V or 48 V DC motor with a geared reduction on the order of 1:75, e.g., can be considered for braking of a single wheel or for braking of two wheels on a common wheel shaft, such as in a railway bogie.

It serves to mention that the motor 14, alternatively and if appropriate, can be arranged on the opposite side of the angle gear 10 and as such extend outwardly from the brake disc, instead of being extended inwards and towards the brake disc, as in the shown embodiment. In this connection it can also be mentioned that the motor 14 is connected to the angle gear housing 13 or to the angle gear holder 16 exclusively without other anchorage, and that the motor thus swings freely together with the angle gear 10 about the pivot axis 5d when the disc-brake is activated.

As can be understood from the embodiment of Fig. 3, the motor, the angle gear and the angle gear holder may be supported in the first lever 5 and arranged on the nearer side of the brake disc as viewed in the direction V along the wheel shaft, and more exactly arranged within a building space between the brake disc 1 and the wheel 101. It shall however also be mentioned that the angle gear, the motor and the angle gear holder may alternatively and if appropriate be supported by the lever 6 located on the far side of the brake disc, and as such located in a building space between the brake disc 1 and a structural beam 102 forming part of a bogie. A third alternative comprises a brake assembly including the brake disc located on the opposite side of the structural beam 102. In all alternatives, the advantages of the present invention in terms of a compact and space saving assembly can be achieved by arranging the levers, the brake disc and the electric motor side by side and in succession in the length direction of the wheel shaft and in essentially parallel planes.

## Claims

1. A disc-brake of lever type controlled by an electric motor, the disc-brake comprising:
- a brake disc (1) configured for non-rotational mounting on a wheel shaft,
- a brake caliper (2) with a first caliper-arm (3) extending on a near side of the brake disc (2) as viewed in a longitudinal direction (V) along the wheel shaft, and with a second caliper-arm (4) extending on the far side of the brake disc (1) as viewed in the same direction (V) of the wheel shaft,
- a first lever (5) with a lever arm-section (5a) arranged for supporting a brake pad, the first lever (5) journalled on the first caliper-arm (3) pivotally about a pivot axis (3a) that is orthogonal with respect to the first caliper-arm (3),
- a second lever (6) with a lever arm-section (6a) arranged for supporting a brake pad, the second lever (6) journalled on the second caliper-arm (4) pivotally about a pivot axis (4a) that is orthogonal with respect to the second caliper-arm (4),
**characterized in that** an angle gear holder (16) is pivotally supported in either one of the lever arm-section (5b) of the first lever (5) or the lever arm-section (6b) of the second lever (6), wherein the angle gear holder (16) pivotally carries:
- an angle gear (10);
- a worm screw (11) which is journalled in the angle gear and having a length sufficient to operate between the first lever (5) and the second lever (6);
- a worm wheel (12) in operative engagement with the worm screw;
- an electric motor (14) with a motor shaft (15) operatively connected with the worm wheel (12), wherein the electric motor (14) extends cantilevered from the angle gear (10) in such way that the electric motor (14), one of the first and second levers (5; 6), the brake disc (1) and the other one of the first and second levers (5; 6) are arranged essentially in parallel planes and successively one after the other as viewed in the direction of the wheel shaft.

2. The disc-brake of claim 1, wherein the angle gear holder (16) comprises a U-shaped bracket having two arms (17; 18) extending in parallel, said arms (17; 18) being journalled pivotally about a common pivot axis (5d; 6d) in the lever arm-section (5b) of the first lever (5) or in the lever arm-section (6b) of the second lever (6).

3. The disc-brake of claim1 or 2, wherein the angle gear holder (16) forms an integrated member of an angle gear housing (13).

4. The disc-brake of claim 3, wherein the angle gear holder (16) comprises two journal pins or journal pin seats (19; 20) arranged on the angle gear housing (13).

5. The disc-brake of any previous claim, wherein the worm screw (11) is arranged to act upon a load sensor (21) which is pivotally arranged in the lever arm-section (5b) of the first lever (5) or in the lever arm-section (6b) of the second lever (6).

6. The disc-brake of any previous claim, wherein the first lever (5) and the second lever (6) each comprises a lever arm-section (5a; 6a), respectively, and wherein a brake pad mount (8; 8') is journalled pivotally about a pivot axis (5c; 6c) that extends from said lever arm-section (5a; 6a) in a radial direction (r) of the brake disc (1), or extends in parallel with the radius (r) of the disc-brake.

7. The disc-brake of claim 6, wherein the pivot axis (5c; 6c) on which the brake pad mount (8; 8') is pivotally journalled, runs vertically towards a centre of the brake disc.

8. A wheeled bogie for a railway vehicle, **characterized in that** at least one disc-brake according to any of claims 1 to 7 is arranged on a wheel shaft (100) in such way that the electric motor (14) is installed between a brake disc (1) and a wheel (101).

## Patentansprüche

1. Scheibenbremse eines Hebeltyps, die durch einen Elektromotor gesteuert wird, wobei die Scheibenbremse aufweist:
eine Bremsscheibe (1), die für eine nicht drehbare Montage an einer Radwelle konfiguriert ist;
einen Bremssattel (2) mit einem ersten Bremssattelarm (3), der sich, betrachtet in einer Längsrichtung (V) entlang der Radwelle, auf einer nahen Seite der Bremsscheibe (1) erstreckt, und mit einem zweiten Bremssattelarm (4), der sich in der gleichen Richtung (V) der Radwelle betrachtet auf der gegenüberliegenden entfernten Seite der Bremsscheibe (1) erstreckt;
einen ersten Hebel (5) mit einem Hebelarmabschnitt (5a), der dazu eingerichtet ist, einen Bremsbelag zu tragen, wobei der erste Hebel (5) auf dem ersten Bremssattelarm (3) um eine in Bezug auf den ersten Bremssattelarm (3) senkrechte Schwenkachse (3a) schwenkbar gelagert ist;
einen zweiten Hebel (6) mit einem Hebelarmabschnitt (6a), der dazu eingerichtet ist, einen Bremsbelag zu tragen, wobei der zweite Hebel (6) auf dem zweiten Bremssattelarm (4) um eine in Bezug auf den zweiten Bremssattelarm (4) senkrechte Schwenkachse (4a) schwenkbar gelagert ist,
**dadurch gekennzeichnet, dass**
ein Winkelgetriebehalter (16) entweder im Hebelarmabschnitt (5b) des ersten Hebels (5) oder im Hebelarmabschnitt (6b) des zweiten Hebels (6) schwenkbar gelagert ist,
wobei der Winkelgetriebehalter (16) schwenkbar trägt:
ein Winkelgetriebe (10);
eine Schneckenschraube (11), die im Winkelgetriebe (10) gelagert ist und eine Länge aufweist, die ausreicht, um zwischen dem ersten Hebel (5) und dem zweiten Hebel (6) betrieben zu werden;
ein Schneckenrad (12), das mit der Schneckenschraube (11) betrieblich in Eingriff steht;
einen Elektromotor (14) mit einer mit dem Schneckenrad (12) betrieblich verbundenen Motorwelle (15), wobei der Elektromotor (14) sich freitragend vom Winkelgetriebe (10) derart erstreckt, dass der Elektromotor (14), einer unter dem ersten und dem zweiten Hebel (5; 6), die Bremsscheibe (1) und der andere unter dem ersten und dem zweiten Hebel (5; 6) im Wesentlichen in parallelen Ebenen und in der Richtung der Radwelle betrachtet nacheinander angeordnet sind.

2. Scheibenbremse nach Anspruch 1, wobei der Winkelgetriebehalter (16) eine U-förmige Halterung mit zwei sich parallel erstreckenden Armen (17; 18) aufweist, wobei die Arme (17; 18) um eine gemeinsame Schwenkachse (5d; 6d) im Hebelarmabschnitt (5b) des ersten Hebels (5) oder im Hebelarmabschnitt (6b) des zweiten Hebels (6) schwenkbar gelagert sind.

3. Scheibenbremse nach Anspruch 1 oder 2, wobei der Winkelgetriebehalter (16) ein integriertes Bauteil eines Winkelgetriebegehäuses (13) bildet.

4. Scheibenbremse nach Anspruch 3, wobei der Winkelgetriebehalter (16) zwei Lagerzapfen oder Lagerzapfensitze (19; 20) aufweist, die auf dem Winkelgetriebegehäuse (13) angeordnet sind.

5. Scheibenbremse nach einem der vorangehenden Ansprüche, wobei die Schneckenschraube (11) derart angeordnet ist, dass sie auf einen Lastsensor (21) wirkt, der schwenkbar im Hebelarmabschnitt (5b) des ersten Hebels (5) oder im Hebelarmabschnitt (6b) des zweiten Hebels (6) angeordnet ist.

6. Scheibenbremse nach einem der vorhergehenden Ansprüche, wobei der erste Hebel (5) und der zweite Hebel (6) jeweils einen entsprechenden Hebelarmabschnitt (5a; 6a) aufweisen, und wobei eine Bremsbelaghalterung (8; 8') um eine Schwenkachse (5c; 6c) schwenkbar gelagert ist, die sich von dem Hebelarmabschnitt (5a; 6a) in einer radialen Richtung (r) der Bremsscheibe (1) erstreckt oder sich parallel zum Radius (r) der Scheibenbremse erstreckt.

7. Scheibenbremse nach Anspruch 6, wobei die Schwenkachse (5c; 6c), auf der die Bremsbelaghalterung (8; 8') schwenkbar gelagert ist, sich vertikal zu einem Mittelpunkt der Bremsscheibe (1) erstreckt.

8. Fahrwerk für ein Schienenfahrzeug, **dadurch gekennzeichnet, dass** mindestens eine Scheibenbremse nach einem der Ansprüche 1 bis 7 auf einer Radwelle (100) derart angeordnet ist, dass der Elektromotor (14) zwischen einer Bremsscheibe (1) und einem Rad (101) installiert ist.

## Revendications

1. Frein à disque de type à levier commandé par un moteur électrique, le frein à disque comportant :
- un disque de frein (1) configuré pour un montage non rotatif sur un arbre de roue,
- un étrier de frein (2) avec un premier bras d'étrier (3) s'étendant sur un côté proche du disque de frein (2) vu dans une direction longitudinale (V) le long de l'arbre de roue, et avec un deuxième bras d'étrier (4) s'étendant sur le côté éloigné du disque de frein (1) vu dans la même direction (V) de l'arbre de roue,
- un premier levier (5) avec une section de bras de levier (5a) agencée pour supporter une plaquette de frein, le premier levier (5) étant tourillonné sur le premier bras d'étrier (3) autour d'un axe de pivotement (3a) qui est orthogonal par rapport au premier bras d'étrier (3),
- un deuxième levier (6) avec une section de bras de levier (6a) agencée pour supporter une plaquette de frein, le deuxième levier (6) étant tourillonné sur le deuxième bras d'étrier (4) autour d'un axe de pivotement (4a) qui est orthogonal par rapport au deuxième bras d'étrier (4),
**caractérisé en ce qu'**un support d'engrenage angulaire (16) est supporté de manière pivotante dans l'une ou l'autre parmi la section de bras de levier (5b) du premier levier (5) ou la section de bras de levier (6b) du deuxième levier (6), dans lequel le support d'engrenage angulaire (16) supporte de manière pivotante :
- un engrenage angulaire (10) ;
- une vis sans fin (11) qui est tourillonnée dans l'engrenage angulaire et ayant une longueur suffisante pour fonctionner entre le premier levier (5) et le deuxième levier (6) ;
- une roue à vis sans fin (12) en prise fonctionnelle avec la vis sans fin ;
- un moteur électrique (14) avec un arbre de moteur (15) relié de manière fonctionnelle à la roue à vis sans fin (12), dans lequel le moteur électrique (14) s'étend en porte-à-faux à partir de l'engrenage angulaire (10) de sorte que le moteur électrique (14), l'un des premier et deuxième leviers (5 ; 6), le disque de frein (1) et l'autre des premier et deuxième leviers (5; 6) soient agencés essentiellement dans des plans parallèles et successivement les uns après les autres vus dans la direction de l'arbre de roue.

2. Frein à disque selon la revendication 1, dans lequel le support d'engrenage angulaire (16) comporte un support en forme de U présentant deux bras (17 ; 18) s'étendant en parallèle, lesdits bras (17 ; 18) étant tourillonnés de manière pivotante autour d'un axe de pivotement commun (5d ; 6d) dans la section de bras de levier (5b) du premier levier (5) ou dans la section de bras de levier (6b) du deuxième levier (6).

3. Frein à disque selon la revendication 1 ou 2, dans lequel le support d'engrenage angulaire (16) forme un élément intégré d'un boîtier d'engrenage angulaire (13).

4. Frein à disque selon la revendication 3, dans lequel le support d'engrenage angulaire (16) comporte deux axes de tourillon ou sièges d'axe de tourillon (19 ; 20) agencés sur le boîtier d'engrenage angulaire (13).

5. Frein à disque selon l'une quelconque des revendications précédentes, dans lequel la vis sans fin (11) est agencée pour agir sur un capteur de charge (21) qui est agencé de manière pivotante dans la section de bras de levier (5b) du premier levier (5) ou dans la section de bras de levier (6b) du deuxième levier (6).

6. Frein à disque selon l'une quelconque des revendications précédentes, dans lequel le premier levier (5) et le deuxième levier (6) comportent chacun respectivement une section de bras de levier (5a ; 6a), et dans lequel un support de plaquette de frein (8 ; 8') est tourillonné de manière pivotante autour d'un axe de pivotement (5c ; 6c) qui s'étend à partir de ladite section de bras de levier (5a ; 6a) dans une direction radiale (r) du disque de frein (1), ou s'étend parallèlement au rayon (r) du frein à disque.

7. Frein à disque selon la revendication 6, dans lequel l'axe de pivotement (5c ; 6c) sur lequel le support de plaquette de frein (8 ; 8) est tourillonné de manière pivotante, s'étend verticalement vers un centre du disque de frein.

8. Bogie à roues pour véhicule ferroviaire, **caractérisé en ce qu'**au moins un frein à disque selon l'une quelconque des revendications 1 à 7 est agencé sur un arbre de roue (100) de sorte que le moteur électrique (14) soit installé entre un disque de frein (1) et une roue (101).
